# EUROPÄISCHE PATENTSCHRIFT

(11) **EP 1 623 125 B1**
(45) Veröffentlichungstag und Bekanntmachung des Hinweises auf die Patenterteilung: **06.06.2007**
(21) Anmeldenummer: 04722552.9
(22) Anmeldetag: 23.03.2004
(51) Int. Cl.: F16B 5/00, G01P 1/02, G07C 7/00

(54) **Gehäuse**
Casing
Boîte

(30) Priorität: 12.05.2003 DE 10321248
(43) Veröffentlichungstag der Anmeldung: 08.02.2006
(73) Patentinhaber: SIEMENS AKTIENGESELLSCHAFT, 80333 München (DE)
(72) Erfinder: HÜGLE, Axel, 78120 Furtwangen (DE); KIRNER, Herbert, 78052 Villingen-Schwenningen (DE); WAHLER, Torsten, 78073 Bad Dürrheim (DE)
(86) Internationale Anmeldenummer: PCT/EP2004/003070
(87) Internationale Veröffentlichungsnummer: WO 2004/099631

(56) Entgegenhaltungen:
- EP-A- 1 052 514
- DE-A- 19 807 332
- DE-U- 20 202 837

## Beschreibung

Die Erfindung betrifft ein Gehäuse, insbesondere ein Gehäuse eines Druckers, eines Fahrtenschreibers für ein Kraftfahrzeug, mit einem Gehäusegrundkörper und einem als Einschub ausgebildeten Träger, der mindestens zum Teil aus dem Gehäuse heraus bewegbar ist, mit mindestens einer Führung, die mindestens zwei erste Führungselemente aufweisen, die an zwei gegenüber liegenden Seiten an dem Träger angeordnet und befestigt sind, und beidseitig des Trägers zwei zweite Führungselemente angeordnet sind, die mit den ersten Führungselementen an dem Träger korrespondieren, so dass der Träger bei einer Bewegung in oder gegen eine Einschubrichtung mittels der Führung geführt ist.

Seit Menschengedenken werden stetig neue Befestigungstechniken entwickelt, dementsprechend weit ist das Feld der Möglichkeiten zwei aneinandergrenzende Bauteile miteinander zu verbinden. Trotz der weit fortgeschrittenen Entwicklung des Standes der Technik sind die bekannten Lösungen bei speziellen Befestigungsaufgaben bisweilen unzureichend. Dies auch deshalb, weil die Anforderungen an Kompaktheit, Automatisierbarkeit der Montage und Präzision in der Verbindungstechnik zunehmen. So bereitet es häufig Schwierigkeiten, bei vollautomatischen Montageabläufen zwei aneinander angrenzende Bauteile bei schlechter Zugänglichkeit mit niedriger Lagetoleranz miteinander zu verbinden. Dies insbesondere dann, wenn eine Zugänglichkeit der Verbindung im Wesentlichen nur in der von den beiden aneinander anzufügenden Grenzflächen aufgespannten Ebene möglich ist. In einem solchen Fall wird häufig auf eine Flanschverbindung zurückgegriffen. Dies hat jedoch den Nachteil, dass an die zu verbindenden Bauteile raumgreifende Flansche angeformt werden müssen und an diesen Flanschen entsprechende Vorkehrungen vorgesehen werden müssen, die das Anbringen von Befestigungselementen ermöglichen.

Derartige Verbindungen eignen sich darüber hinaus auch nicht für eine vollautomatische Montage. Dieses Problem stellt sich stets bei dem festen Verbinden anstoßender flächiger Bauteile.

Aus der Europäischen Patentanmeldung EP 1 052 514 A1 ist bereits ein Gehäuse der eingangs genannten Art bekannt, welches jedoch ungünstig Ungenauigkeiten auf die Führung des Trägers überträgt, was zur Beeinträchtigung der Druckqualität der beschriebenen Druckvorrichtung führt. Eine ähnliche Anordnung ist auch der Offenlegungsschrift DE 198 07 332 A1 entnehmbar, wobei seitliche Führungsschienen Bestandteil eines U-förmigen Führungsbauteils sind, das zu Montagezwecken die Präzision beeinträchtigend verformbar ausgebildet sein muss.

Die Erfindung hat es sich daher zur Aufgabe gemacht, eine Verbindung zu schaffen, welche eine stabile Befestigung zweier angrenzender Bauteile ermöglicht, insbesondere flächiger Bauteile bei hoher Genauigkeit der Lage zueinander und bevorzugter Zugänglichkeit in dem Raum um die von den benachbarten angrenzenden Stirnflächen der Bauteile aufgespannten Ebene.

Zur Lösung der Aufgabe schlägt die Erfindung ein Gehäuse der eingangs genannten Art mit den Merkmalen des Anspruchs 1 vor. Die Unteransprüche beinhalten vorteilhafte Weiterbildungen der Erfindung.

Statt einer bisher üblichen Befestigung der ersten Führungselemente an dem Gehäuse sind die ersten Führungselemente erfindungsgemäß an dem mittleren Grundträger befestigt, so dass die in der Regel hohen Ungenauigkeiten des Gehäuses keinen Einfluss auf die Lage der zweiten Führungselemente haben. Für die relative Lage der beiden zweiten Führungselemente zueinander ist erfindungsgemäß nur noch die Genauigkeit des mittleren Grundträgers maßgeblich.

Ein weiterer Vorteil der Anordnung eines erfindungsgemäßen mittleren Grundträgers zwischen den zwei zweiten Führungselementen ergibt sich bei der Montage, während derer sämtliche mit dem mittleren Grundträger und den zweiten.Führungselementen direkt in Verbindung stehende Bauteile zunächst vollautomatisch zusammengefasst werden können und eine separat handhabbare Einheit bilden. Auf diese Weise können diese Bauteile auch unabhängig von der Gesamtanordnung getestet werden.

Zu diesem Zweck ist es sinnvoll, die beiden ersten Führungselemente mit geeigneten Verbindungselementen zu versehen, die mit entsprechenden Gegenstücken an dem mittleren Grundträger gewährleisten, dass keine der Komponenten verloren gehen kann. Hervorragend sind hierfür Rast- oder Klipsverbindungen geeignet, gegebenenfalls in Kombination mit vorzugsweise zylindrischen oder konischen Führungen.

Besonders zweckmäßig ist eine solche Anordnung, wenn in dem Gehäuse ein Drucker angeordnet ist, welcher eine Medieneinheit zur Aufnahme für das zu bedruckende Medium aufweist, die an dem Träger befestigt ist. Die Anforderungen an den Komfort beim Wechseln des zu bedruckenden Mediums erfordern, dass der Drucker eine Druckeinheit aufweist, die an dem Grundträger befestigt ist.

Eine derartige Zusammenstellung von Träger, Grundträger, Medieneinheit, Transporteinheit und Druckeinheit hat zur Folge, dass die zu der statischen Druckeinheit bewegliche Transporteinheit mit hoher Präzision geführt werden muss, damit das Druckbild keine unakzeptablen Qualitätseinbußen aufgrund von Fehlpositionierungen des Druckkopfes zu der Transporteinheit erfährt. Die erfindungsgemäße Anordnung eines mittleren Grundträgers, der den Träger im Wesentlichen übergreift und an dem die zweiten Führungselemente befestigt sind, ist für die relative Lage der Druckeinheit zu der Transporteinheit besonders hoch.

Besonders vorteilhaft ist die Kombination der erfindungsgemäßen Verbindung mit der zuvor erläuterten Anordnung von Führungselementen und dem Grundträger in der Weise, dass ein erstes Führungselement an dem Grundträger mittels einer Verbindung befestigt ist, bei welcher mindestens das erste Führungselement eine erste Halbbohrung mit einem ersten Kragen aufweist, der Grundträger eine zu der ersten Halbbohrung korrespondierende zweite Halbbohrung mit einem zweiten Kragen aufweist, im zusammengefügten Zustand sich die beiden Halbbohrungen zu einer Vollbohrung ergänzen, eine Befestigungsanordnung sich durch die Vollbohrung erstreckt, welche ein erstes Befestigungselement mit einer mit den Krägen in der Form korrespondierenden Ausnehmung aufweist, welche die Krägen zumindest teilweise umfasst und dadurch das erste Führungselement an dem Grundträger formschlüssig befestigt ist. Diese Anordnung hat bezüglich der Festigkeit der Verbindung, der Anzahl der Bauelemente, der erforderlichen Zugänglichkeit der Verbindung zur Fixierung der Bauelemente und der Lagepräzision, insbesondere der Führungselemente an dem Grundträger besondere Vorteile.

Diese Vorteile werden noch verstärkt, wenn der Kragen auf dem Außenumfang konisch ausgebildet ist, so dass ein Festlegen der Befestigungsanordnung eine die beiden Halbbohrungen zusammenführende Kraft erzeugt.

Im besonderen Maße kommen die vorgenannten Vorteile bei einem Fahrtenschreiber mit einem Gehäuse der vorgenannten Art zum Tragen.

Im Folgenden ist die Erfindung anhand eines speziellen Ausführungsbeispiels zur Verdeutlichung unter Bezugnahme auf Zeichnungen näher erläutert.

Es zeigen:
- Fig. 1:: eine perspektivische Darstellung eines Gehäusegrundkörpers,
- Fig. 2:: eine perspektivische Darstellung eines Gehäusegrundkörpers mit einem darin befindlichen Grundträger mit Führungselementen,
- Fig. 3:: eine perspektivische Darstellung eines Gehäusegrundkörpers mit darin befindlichem Grundträger, Führungselementen und Befestigungselementen,
- Fig. 4:: eine perspektivische Darstellung eines Grundträgers, mit Führungselementen, einen Träger mit Transporteinheit und Druckmodul in Explosionsdarstellung und
- Fig. 5:: eine perspektivische Darstellung der in Fig. 4 dargestellten Bauteile als Zusammenbau.
- Fig. 6:: eine Darstellung einer Konusmutter.

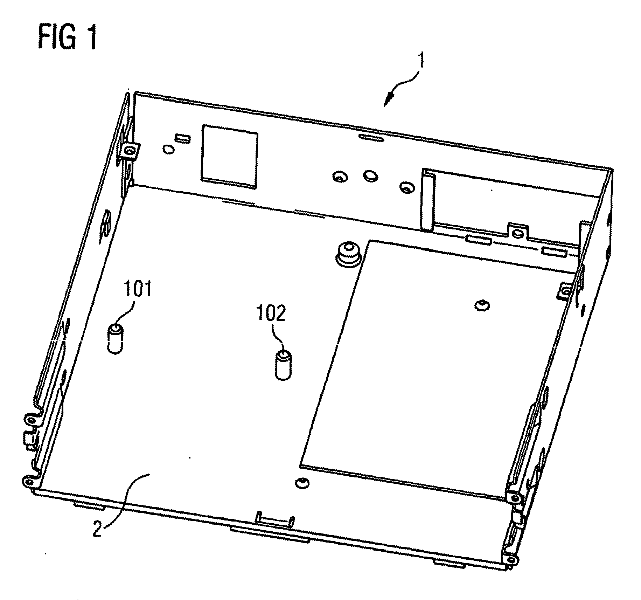

In Fig. 1 ist das Gehäuse bzw. der Gehäusegrundkörper 1 mit dem Bezugszeichen 2 versehen. Auf einer Wandung 2 des Bodens des Gehäusegrundkörpers 1 sind zwei Gewindebolzen 101, 102 fest angebracht. Der Gehäusegrundkörper 1 besteht aus Metall.

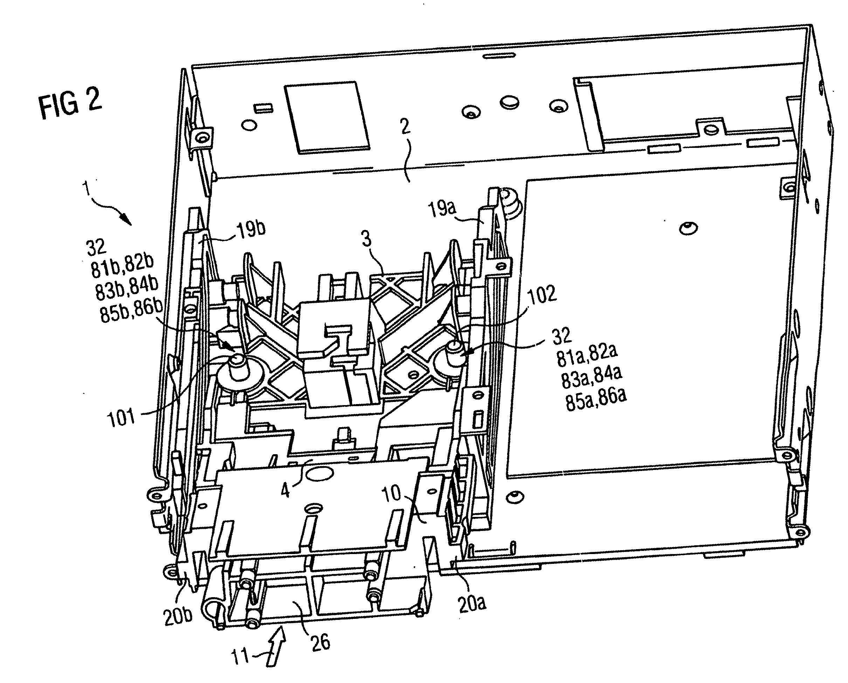

In der Darstellung der Fig. 2 sind Teile eines Druckers in den Gehäusegrundkörper 1 eingesetzt. Es handelt sich hierbei um einen Grundträger 3, mit einer an dem Grundträger 3 angebrachten Druckeinheit 4, die einen in der Darstellung nicht erkennbaren Druckkopf aufweist. Beidseitig des Grundträgers 3 angeordnete erste Führungselementen 19a, b gehören zu an einem Träger 10 beidseitig angeordneten zweiten Führungselementen 20a, 20b, die mit dem ersten Führungselementen 19a, b in der Form korrespondieren. Der Träger 10 ist in den ersten Führungselementen 19a, 19b mittels der zweiten Führungselemente 20a, 20b verschiebbar in einer Einschubrichtung 11 und entgegen der Einschubrichtung 11 auf einer Kreisbahn geführt. Die aneinander anliegenden Flächen der Führungselemente 19a, 19b, 20a, 20b sind als Gleitlager ausgebildet.

Der Grundträger 3 weist zwei zweite Halbbohrungen 84a, 84b auf, welche sich mit zwei ersten Halbbohrungen 81a, 81b an den ersten Führungselementen 19a, 19b jeweils zu einer Vollbohrung 85a, 85b ergänzen. Die ersten und zweiten Halbbohrungen 81a, 81b, 84a, 84b weisen einen ersten Kragen 82a, 82b bzw. zweiten Kragen 83a, 83b auf, der jeweils auf dessen Außenumfang konisch ausgebildet ist.

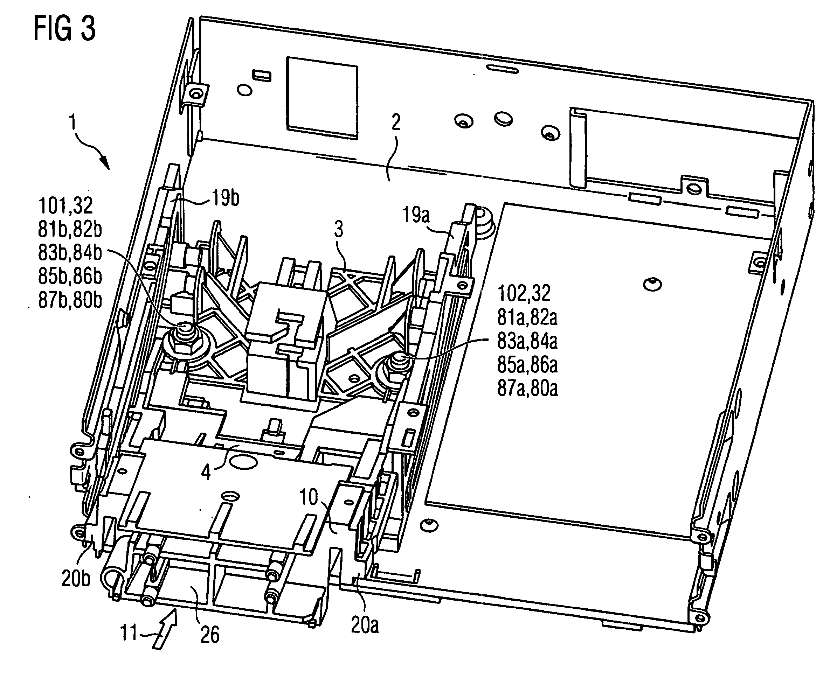

Wie in Fig. 3 dargestellt, ist auf die Gewindebolzen 101, 102 jeweils ein erstes Befestigungselement 87a, 87b aufschraubbar, welches als im Folgenden noch erläuterte Konusmutter 80a, 80b ausgebildet ist. Die angrenzenden Bauteile, nämlich Grundträger 3 und erste Führungselemente 19 sind auf diese Weise mittels einer erfindungsgemäßen Verbindung 32 aneinander befestigt.

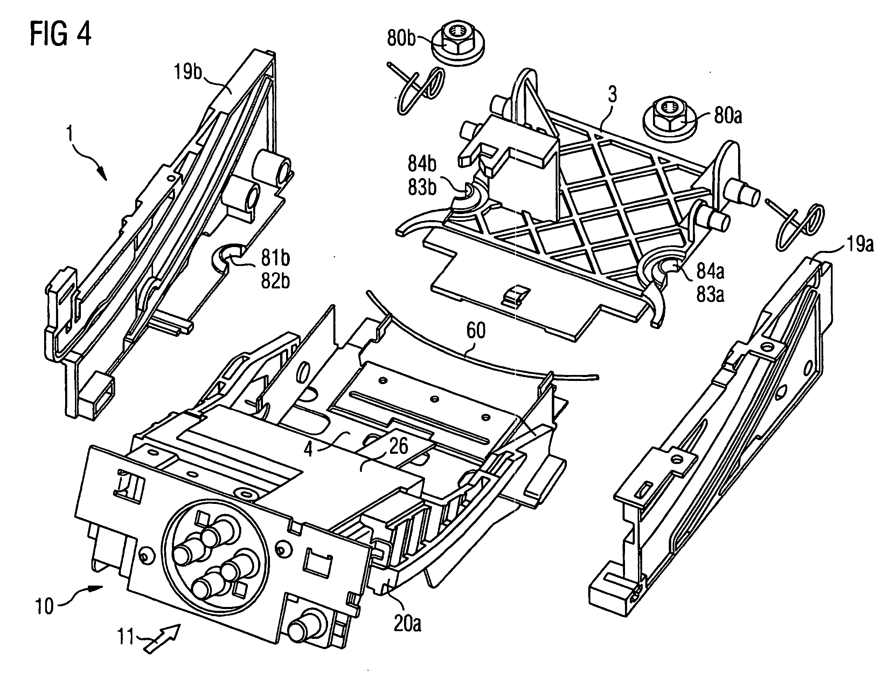

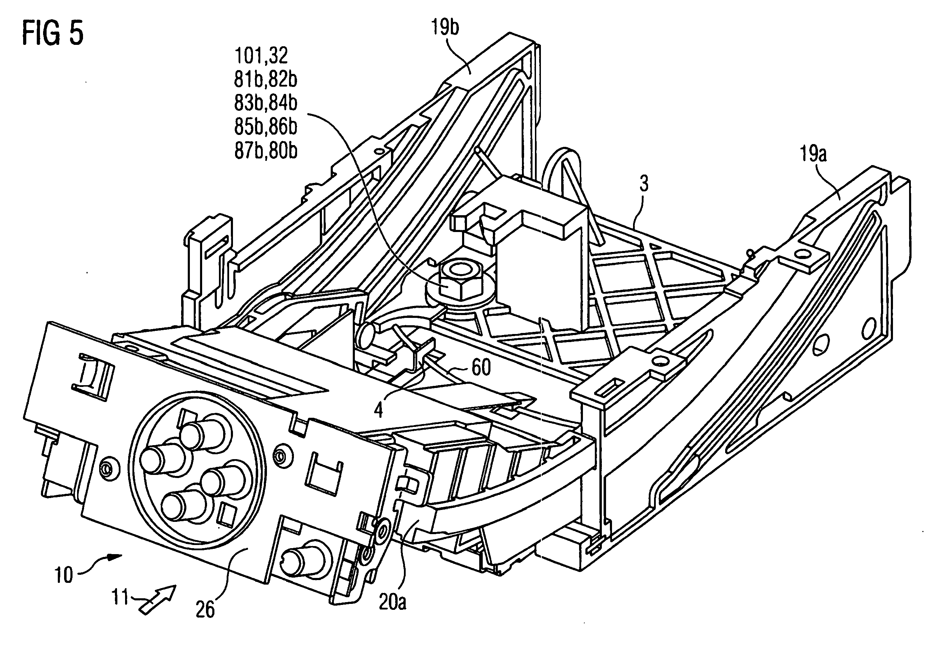

In den Figuren 4 und 5 sind die in dem Gehäusegrundkörper 1 gemäß der Darstellungen der Fig. 2 und 3 angeordneten Bauteile einschließlich weiterer Bauteile nochmals in Explosionsdarstellung und als Zusammenbau gezeigt. Die Druckeinheit 4 ist mittels eines elastischen Elements, nämlich einer Stabfeder 60 federnd an dem Grundträger 3 gelagert, so dass beim Einschieben des Trägers 10 sich die Druckeinheit 4 an nicht näher bezeichneten Zentrierelementen des Trägers 10 ausrichtet und auf diese Weise für die Druckqualität ungünstige Toleranzen kompensierend verspannt ist. So ist stets eine reproduzierbare Lage der Druckeinheit 4 zu dem Träger 10 und einer an dem Träger 10 angebrachten Transporteinheit 5 und Medieneinheit 26 gewährleistet. Dies stellt eine hervorragende Druckqualität bei gleichzeitig komfortablem Druckmedienwechsel sicher.

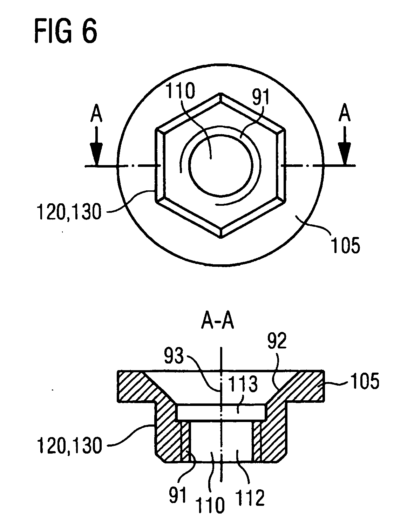

Die Darstellung der Fig. 6 zeigt das erste Befestigungselement 87 bzw. die Konusmutter 80. Im Wesentlichen handelt es sich um einen Grundkörper 105, der mit einer Bohrung 110 längs einer Zentralachse 111 versehen ist. In einem ersten Abschnitt 92 ist die Bohrung 110 konisch erweitert und in einem zweiten Abschnitt 112 ist die Bohrung 110 mit Innengewinde versehen. Zwischen dem ersten Abschnitt 92 und dem zweiten Abschnitt 112 befindet sich ein zylindrischer dritter Abschnitt 113. Der konisch erweiterte erste Abschnitt 92 weist eine Tiefe von etwa 70% des Bohrungsdurchmessers auf. Der mit dem Innengewinde 91 versehene zweite Abschnitt 112 hat etwa die gleiche Ausdehnung. Auf einem Außenumfang 120 des Grundkörpers 105 sind Schlüsselflächen 130 zum Ansetzen eines Werkzeugs angeordnet.

## Patentansprüche

1. Gehäuse, insbesondere Gehäuse eines Druckers eines Fahrtenschreibers für ein Kraftfahrzeug, mit einem Gehäusegrundkörper (1) und einem als Einschub ausgebildeten Träger (10), der mindestens zum Teil aus dem Gehäuse heraus bewegbar ist, mit mindestens einer Führung, die mindestens zwei zweite Führungselemente (20a, 20b) aufweist, die an zwei gegenüberliegenden Seiten an dem Träger (10) angeordnet und befestigt sind, und wobei beidseitig des Trägers (10) zwei erste Führungselemente (19a, 19b) angeordnet sind, die mit den zweiten Führungselementen (20a, 20b) an dem Träger (10) korrespondieren, so dass der Träger (10) bei einer Bewegung in oder gegen eine Einschubrichtung (11) mittels der Führung geführt ist,
**dadurch gekennzeichnet,**
**dass** die ersten Führungselemente (19a, 19b) an einem mittleren Grundträger (3) befestigt sind, der den Träger (10) im Wesentlichen zumindest zeitweise übergreift,
**dass** die ersten Führungselemente (19a, 19b) und der mittlere Grundträger (3) an dem Gehäusegrundkörper (1) mittels Befestigungselementen (87a, 87b) gegeneinander verspannt befestigt sind.

2. Gehäuse nach Anspruch 1,
**dadurch gekennzeichnet,**
**dass** in dem Gehäuse ein Drucker angeordnet ist mit einer Medieneinheit (26) zur Aufnahme für das zu bedruckende Medium, die an dem Träger (10) befestigt ist.

3. Gehäuse nach Anspruch 2,
**dadurch gekennzeichnet,**
**dass** der Drucker eine Druckeinheit (4) aufweist, die an dem Grundträger (3) befestigt ist.

4. Gehäuse nach mindestens einem der vorhergehenden Ansprüche,
**dadurch gekennzeichnet,**
**dass** der Träger (10) zumindest teilweise in der Art einer Schublade zwischen den ersten Führungselementen angeordnet ist.

5. Gehäuse nach mindestens einem der vorhergehenden Ansprüche,
**dadurch gekennzeichnet,**
**dass** ein erstes Führungselement (19a, 19b) an dem Grundträger (3) mittels einer Verbindung (32) befestigt ist, bei welcher mindestens ein erstes Führungselement (19a, 19b) eine erste Halbbohrung (81a, 81b) mit einem ersten Kragen (82a, 82b) aufweist, der Grundträger (3) eine zu der ersten Halbbohrung (81a, 81b) korrespondierende zweite Halbbohrung (84a, 84b) mit einem zweiten Kragen (82a, 82b) aufweist, im zusammen gefügten Zustand sich die beiden Halbbohrungen (81a, 84a, 81b, 84b) zu einer Vollbohrung (85a, 85b) ergänzen, eine Befestigungsanordnung (86a, 86b) sich durch die Vollbohrung (85a, 85b) erstreckt, welche ein erstes Befestigungselement (87, 87a, 87b) mit einer mit den Krägen (82a, 82b) in der Form korrespondierenden Ausnehmung (88) aufweist, welche die Krägen (82a, 82b) zumindest teilweise umfasst und **dadurch** das erste Führungselement (19a, 19b) an dem Grundträger (3) formschlüssig befestigt ist.

6. Gehäuse nach Anspruch 5,
**dadurch gekennzeichnet,**
**dass** der Kragen (82a, 82b) auf dem Außenumfang konisch ausgebildet ist, so dass ein Festlegen der Befestigungsanordnung (86a, 86b) eine die beiden Halbbohrungen (81a, 84a, 81b, 84b) zusammenführende Kraft erzeugt.

7. Gehäuse nach mindestens einem der vorhergehenden Ansprüche
**dadurch gekennzeichnet,**
**dass** die Medieneinheit (26) eine Aufnahme für eine Papierrolle und eine Transporteinheit (5) für Papier der Papierrolle aufweist.

8. Gehäuse nach mindestens einem der vorhergehenden Ansprüche,
**dadurch gekennzeichnet,**
**dass** der Träger (10) relativ zu der Druckeinheit (4) bewegbar ist, insbesondere in die Einschubrichtung (11) in eine Betriebsposition und entgegen der Einschubrichtung aus einer Betriebsposition heraus bewegbar ist.

9. Fahrtenschreiber mit einem Gehäuse nach mindestens einem der vorhergehenden Ansprüche.

## Claims

1. Housing, in particular a housing for a printer of a motor vehicle tachograph, having a basic housing body (1) and a support (10) which is designed as an insert, can be moved at least partly out of the housing and has at least one guide which comprises at least two second guide elements (20a, 20b) which are arranged on and fastened to the support (10) on two opposite sides, and two first guide elements (19a, 19b) which correspond to the second guide elements (20a, 20b) on the support (10) are arranged on both sides of the support (10), with the result that the support (10) is guided by means of the guide during a movement in or against an insertion direction (11), **characterized in that** the first guide elements (19a, 19b) are fastened to a central base support (3) which substantially overlaps the support (10) at least periodically, **in that** the first guide elements (19a, 19b) and the central base support (3) are fastened, braced one against the other, to the basic housing body (1) by means of fastening elements (87a, 87b).

2. Housing according to claim 1, **characterized in that** a printer is arranged in the housing and has a media unit (26), which is fastened to the support (10), for receiving the medium which is to be printed on.

3. Housing according to claim 2, **characterized in that** the printer comprises a printing unit (4) which is fastened to the base support (3).

4. Housing according to at least one of the preceding claims, **characterized in that** the support (10) is arranged at least partially in the manner of a drawer between the first guide elements.

5. Housing according to at least one of the preceding claims, **characterized in that** a first guide element (19a, 19b) is fastened to the base support (3) by means of a connection (32) in which at least a first guide element (19a, 19b) has a first half bore (81a, 81b) with a first collar (82a, 82b), the base carrier (3) has a second half bore (84a, 84b), with a second collar (82a, 82b), corresponding to the first half bore (81a, 81b), the two half bores (81a, 84a, 81b, 84b) complement one another to form a complete bore (85a, 85b) in the joined-together state, a fastening arrangement (86a, 86b) extends through the complete bore (85a, 85b) and comprises a first fastening element (87, 87a, 87b) with a socket (88) which corresponds in form to the collars (82a, 82b) and which at least partially encloses the collars (82a, 82b), and the first guide element (19a, 19b) is thereby fastened to the base support (3) in a positive manner.

6. Housing according to claim 5, **characterized in that** the collar (82a, 82b) is designed to be conical on the outer circumference, with the result that a force which brings together the two half bores (81a, 84b, 81b, 84b) is produced when securing the fastening arrangement (86a, 86b).

7. Housing according to at least one of the preceding claims, **characterized in that** the media unit (26) comprises a receptacle for a paper roll and a feed unit (5) for paper of the paper roll.

8. Housing according to at least one of the preceding claims, **characterized in that** the support (10) can be moved relative to the printing unit (4), being able in particular to be moved in the insertion direction (11) into an operating position and counter to the insertion direction out of an operating position.

9. Tachograph having a housing according to at least one of the preceding claims.

## Revendications

1. Boîtier, notamment boîtier pour une imprimante d'un tachygraphe pour véhicule automobile, ayant un corps de base (1) et un support (10) conçu comme tiroir, qui peut être sorti au moins partiellement hors du boîtier, ayant un système de guidage, qui comporte au moins deux deuxièmes organes guides (20a, 20b), lesquels sont disposés et fixés sur le support (10) sur deux côtés se faisant face, et deux premiers organes guides (19a, 19b) étant disposés des deux côtés du support (10) en correspondant avec les deuxièmes organes guides (20a, 20b) sur le support (10), si bien que le support (10), lors d'un mouvement dans un sens d'encastrement (11) ou dans un sens contraire au sens d'encastrement, est guidé au moyen du système de guidage,
**caractérisé par le fait**
**que** les premiers organes guides (19a, 19b) sont fixés à un support de base central (3) qui chevauche, pour l'essentiel, au moins temporairement, le support (10),
**que** les premiers organes guides (19a, 19b) et le support de base central (3) sont fixés, tout en étant serrés l'un contre l'autre, au corps de base (1) du boîtier au moyen d'éléments de fixation (87a, 87b).

2. Boîtier selon la revendication 1,
**caractérisé par le fait**
**qu'**une imprimante est disposée dans le boîtier avec une unité (26) destinée à recevoir le milieu à imprimer, qui est fixée au support (10).

3. Boîtier selon la revendication 2,
**caractérisé par le fait**
**que** l'imprimante comporte une unité d'impression (4), qui est fixée au support de base (3).

4. Boîtier selon au moins l'une des revendications précédentes,
**caractérisé par le fait**
**que** le support (10) est mis en place au moins partiellement à la manière d'un tiroir entre les premiers organes guides.

5. Boîtier selon au moins l'une des revendications précédentes,
**caractérisé par le fait**
**qu'**un premier organe guide (19a, 19b) est fixé au support de base (3) au moyen d'une liaison (32) dans laquelle au moins le premier organe guide (19a, 19b) comporte un premier demi-alésage (81a, 81b) avec une première collerette (82a, 82b), dans laquelle le support de base (3) comporte un deuxième demi-alésage (84a, 84b), avec une deuxième collerette (82a, 82b), correspondant au premier demi-alésage (81a, 81b), dans laquelle, dans l'état assemblé, les deux demi-alésages (81a, 84a, 81b, 84b) se complètent pour former un alésage complet (85a, 85b), dans laquelle un système de fixation (86a, 86b) passe à travers l'alésage complet (85a, 85b) qui comporte un premier organe de fixation (87, 87a, 87b) avec un évidement (88) correspondant par sa forme aux collerettes (82a, 82b), lequel entoure au moins partiellement les collerettes (82a, 82b) et dans laquelle, de cette façon, le premier organe guide (19a, 19b) est fixé par assemblage géométrique au support de base (3).

6. Boîtier selon la revendication 5,
**caractérisé par le fait**
**que** la collerette (82a, 82b) est configurée conique sur sa périphérie extérieure, si bien qu'un assemblage du système de fixation (86a, 86b) génère une force assemblant les deux demi-alésages (81a, 84a, 81b, 84b).

7. Boîtier selon au moins l'une des revendications précédentes,
**caractérisé par le fait**
**que** l'unité (26) destinée à recevoir le milieu à imprimer comporte un logement pour un rouleau de papier et une unité de transport (5) pour le papier du rouleau de papier.

8. Boîtier selon au moins l'une des revendications précédentes,
**caractérisé par le fait**
**que** le support (10) peut se déplacer par rapport à l'unité d'impression (4), notamment dans la direction d'encastrement (11), dans une position de fonctionnement, et, dans le sens contraire à la direction d'encastrement, hors d'une position de fonctionnement.

9. Tachygraphe ayant un boîtier conforme au moins l'une des revendications précédentes.
